# EUROPEAN PATENT APPLICATION

(11) **EP 4 583 013 A1**
(43) Date of publication of application: **09.07.2025**
(21) Application number: 24163729.7
(22) Date of filing: 15.03.2024
(51) Int. Cl.: G06N 10/80, G06F 8/40, G06F 9/50, G06F 11/30

(54) **SYSTEM AND METHOD FOR DISTRIBUTED QUANTUM COMPUTING EXECUTION**

(30) Priority: 08.01.2024 US 202418406916
(71) Applicant: Qoro Quantum Limited, London, EC2V 6DN (GB)
(72) Inventor: DiAdamo, Giuseppe, Toronto, M8Y 1Z5 (CA)
(74) Representative: Zenz Patentanwälte Partnerschaft mbB

(57) **Abstract**

A system for distributed quantum computing execution is provided. The system comprises a processor configured to receive at least one user instruction set, process user data to output a flow of quantum programs, determine allocation of available quantum resources need for the flow of quantum programs, remap the flow of programs to the allocation of available quantum resources produce distributed machine level instructions, serialize said distributed machine level instructions, and send the distributed machine level instructions to a distributed quantum computing system. The system further includes a distributed quantum computing system comprising, at least one quantum processing unit configured to receive at least one set of machine level instructions, communicate with a central controller, and send measurement results back to the processor.

## Description

### BACKGROUND

The exemplary embodiment relates to quantum computing and finds particular application in connection with a method and system for optimally sharing the computing resources among various users simultaneously.

Current quantum computers work as individual computing systems, connected classically to a control system that controls the operations on qubits (or quantum bits). The number of qubits is important for quantum computing as it is one measure of how much potential power the quantum computer has. Because of the challenging hardware requirements for building quantum computers, it is particularly challenging to build single quantum computers with many qubits, and it is estimated that the qubit limit for a single quantum computer is roughly on the order of 10,000. In order to perform quantum algorithms, logical qubits are needed, where each logical qubit requires potentially hundreds or thousands of physical qubits to implement, greatly decreasing the power of the quantum computer. There is a further demand that thousands of logical qubits are needed before the true power of quantum computing becomes apparent.

In order to scale quantum computers up and overcome the challenges, one approach is to take a collection of smaller scale quantum computers and network them together via classical and quantum communication channels, along with the classical control system; this forms a distributed quantum computer. In order to perform the same quantum algorithms, one would perform on a single quantum computer over a distributed system of quantum computers, additional tasks need to be performed beforehand. For example, additional operations need to be injected into the algorithm steps to produce a logically equivalent version for the distributed system. These steps include communication steps, transmitting both entanglement and classical information, and logical quantum control operations. The additional operations injected to the algorithm steps require coordination and synchronization between the distributed system, which have very strict requirements. The algorithm in some cases is disassembled and reassembled, combining measurement outputs from various times and qubits across the system. For additional speedup and resource utilization, the algorithm structure can also be modified such that a parallel execution of the algorithm is possible. The system can also include operations to gain this speed-up, allocating resources over the distributed system.

Further, because it is assumed that quantum computers will be primarily accessed via cloud environments, it will be necessary to optimally share the computing resources amongst various users simultaneously. A secondary problem of how to optimally and securely allocate quantum computing resources over a distributed quantum computing system arises. Therefore, there is a need for a system that allows as many users as possible access to the system simultaneously.

### BRIEF DESCRIPTION

Various details of the present disclosure are hereinafter summarized to provide a basic understanding. This summary is not an extensive overview of the disclosure and is intended neither to identify certain elements of the disclosure, nor to delineate the scope thereof. Rather, the primary purpose of the summary is to present certain concepts of the disclosure in a simplified form prior to the more detailed description that is presented hereinafter.

In accordance with one aspect of the presently described embodiments, a system for distributed quantum computing execution is provided. The system comprises a processor and at least one memory including computer program code; the at least one memory and the computer program code configured to, with the processor configured to receive a plurality of quantum programs from one or more users, establish a communication connection with at least one distributed quantum computer, discovering all nodes of the distributed quantum computer, wherein each node comprises at least one quantum processor, process the plurality of quantum programs to create a remapped set of distributed quantum programs, determine an allocation of available quantum resources needed for the set of quantum programs, and convert the remapped set of quantum programs into at least one set of machine level instructions for each node in the distributed quantum computer. The system further includes a processor configured to distribute the at least one set of machine instructions to each of the nodes, wherein each node executes instructions based at least in part on the allocation determined by the processor, monitor the performance of the distributed quantum computer, collect all output from the executed instructions, retrieve the collection of output, convert the output, and send the converted output to at least one user.

In accordance with another aspect of the presently described embodiments, a method for distributed quantum computing execution is provided. The method comprises receiving a plurality of quantum programs from one or more users, establishing a communication connection with at least one distributed quantum computer, discovering all nodes of the distributed quantum computer, wherein each node comprises at least one quantum processor, processing the plurality of quantum programs to create a remapped set of distributed quantum programs, determining an allocation of available quantum resources needed for the set of quantum programs, and converting the remapped set of quantum programs into at least one set of machine level instructions for each node in the distributed quantum computer. The method further includes distributing the at least one set of machine instructions to each of the nodes, wherein each node executes instructions based at least in part on the allocation determined by the processor, monitoring the performance of the distributed quantum computer, collecting all output from the executed instructions, retrieving the collection of output, converting the output, and sending the converted output to at least one user.

Optionally, and in accordance with any of the above aspects of the exemplary embodiment, the topology of the distributed quantum computer is provided by at least one of user input or an automatic network discovery protocol.

Optionally, and in accordance with any of the above aspects of the exemplary embodiment, remapping further comprises determining quality of available quantum resources within the distributed quantum computer.

Optionally, and in accordance with any of the above aspects of the exemplary embodiment, the plurality or collection of quantum programs may be transpiled to remove quantum operations requiring greater than 2 qubits.

Optionally, and in accordance with any of the above aspects of the exemplary embodiment, the at least one memory and the computer program code are further configured to, with the processor, cause the system to ensure all of the quantum operations are executable, wherein ensuring all of the quantum operations are executable comprises one or more of the following: remapping any non-executable gates to an equivalent gate that is executable, or signaling an execution error.

Optionally, and in accordance with any of the above aspects of the exemplary embodiment, resource allocation is further comprised of finding qubits in the system to run the distributed quantum algorithm, determining quality of quantum resources, ordering qubits by their quality, designating qubits for computation and reserving the remaining qubits for communication, and determining an allocation of quantum resources based at least in part on the designation for computation and the remapped distributed set of quantum programs.

Optionally, and in accordance with any of the above aspects of the exemplary embodiment, resource allocation is further comprised of a machine learning system trained to optimize the allocation of qubits.

Optionally, and in accordance with any of the above aspects of the exemplary embodiment, resource allocation is optimized by a reinforcement learning system, the reinforcement learning system is comprised of receiving information on quality of execution and current state of the quantum resources, training a machine learning network to optimize entanglement and communication resources, generating a resource allocation policy based at least in part on the optimization of entanglement and communication resources, and setting a value for feedback based on the performance of the policy to use for the next iteration.

Optionally, and in accordance with any of the above aspects of the exemplary embodiment, additional optimization can be performed to minimize noise by choosing the best qubits based on at least one of coherence time or gate fidelity for that qubit.

Optionally, and in accordance with any of the above aspects of the exemplary embodiment, the at least one memory and the computer program code are further configured to, with the processor, cause the system to perform a synchronization of nodes involved in the computation and calibrate the nodes of the distributed quantum computer.

Optionally, and in accordance with any of the above aspects of the exemplary embodiment, setting instruction durations based in part on the physical aspects of entanglement generation.

### BRIEF DESCRIPTION OF THE DRAWINGS

The following description and drawings set forth certain illustrative implementations of the disclosure in detail, which are indicative of several exemplary ways in which the various principles of the disclosure may be carried out. The illustrative examples, however, are not exhaustive of the many possible embodiments of the disclosure. Other objects, advantages and novel features of the disclosure will be set forth in the following detailed description of the disclosure when considered in conjunction with the drawings, in which:
FIG. 1 is a block diagram showing an exemplary system according to the presently described embodiments;
FIG. 2 illustrates an exemplary distributed quantum computer according to the presently described embodiments;
FIGS. 3A-E are a series of flowcharts illustrating an exemplary method according to the presently described embodiments; and
FIG. 4 is flowchart illustrating an exemplary reinforcement learning method according to the presently described embodiments.

### DETAILED DESCRIPTION

According to the presently described embodiments, in at least one form, a high-level compiler takes a user algorithm (or programs) in the form of a monolithic quantum circuit and a designated resource allocation. It then performs data and communication qubit allocation with consideration of qubit quality and communication resource minimization, placing qubits accordingly. Once allocated, the monolithic input is remapped to the distributed allocation, filling any missing communication steps as needed. The compiler inserts entanglement generation steps when needed such that entanglement resources are available with high probability when they are needed. Next, the high-level compiler injects any error correction steps. Then, a low-level compiler takes the equivalent circuit and converts it to machine level instructions with time-stamped operations (or at least grouped operations). These instructions are generated for each quantum processor (also referred to as a node) of a quantum computer used in the algorithm execution. These individual instructions are then passed to each respective node in the distributed quantum computer and executed.

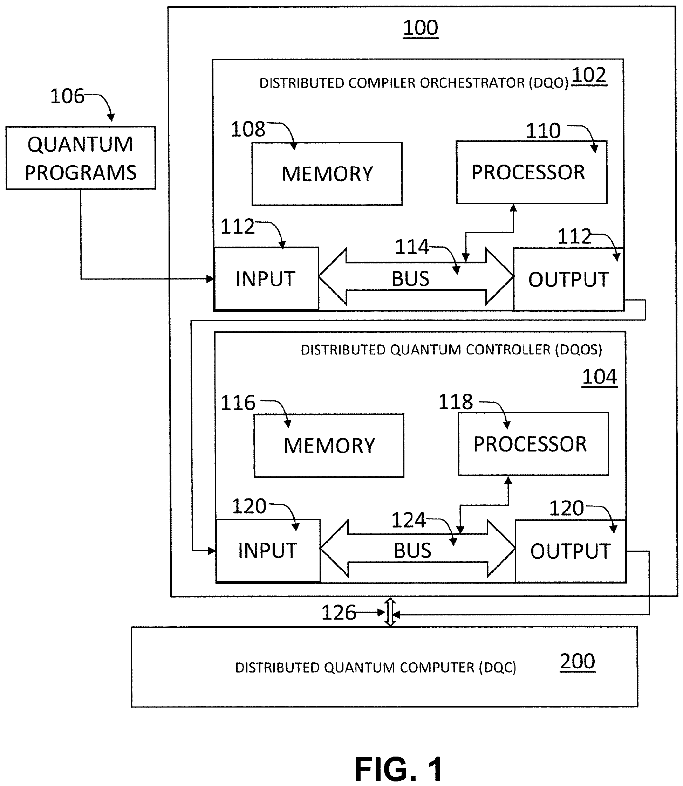

Referring now to the drawings wherein the showings are for purposes of illustrating the exemplary embodiments only and not for purposes of limiting the claimed subject matter, FIG. 1 is a schematic illustration showing an example system **100** for distributed quantum computing execution in the presently described embodiments. As shown, the quantum computing execution system **100** may include a distributed compiler orchestrator **102** and a distributed quantum controller **104.** The system **100** for distributed quantum computing execution is linked together with a distributed quantum computer **200** by communication links **126** (which may be wired or wireless links). These components are described in greater detail below.

The distributed compiler orchestrator (DCO) or orchestrator **102** illustrated in FIG. 1 includes at least one processor **110** hardware device for executing software instructions. The processor **110** can be a custom made or commercially available processor, a central processing unit (CPU), an auxiliary processor among several processors associated with the server computer, a semiconductor-based microprocessor (in the form of a microchip or chip set), or generally any device for executing software instructions. The processor **110** controls the overall operation of the system by execution of processing instructions or software, which are stored in memory **108** connected to the processor **110.** In one embodiment, processor **110,** controls the overall operation of the system by execution of processing instructions for a distributed compiler orchestrator stored in memory **108.**

In general, the system **100** operates based on the input of a collection of user programs, or circuits, **106** to, for example, an input interface **112** and instructions provided in or to the system **100** for distributed quantum computing execution. This system is also configured to optionally monitor and control a DQC or distributed quantum computer **200.**

The DCO or orchestrator **102** includes one or more communication interfaces (I/O), such as network interfaces **112** for communicating with external devices, such as a distributed quantum controller **104,** a DQC or distributed quantum computer **200,** and any external systems or sources such as those including datasets (e.g., artificial intelligence datasets) and other resources (e.g., software routines, processors and/or memories) that may be used by the system 100 to implement the presently described embodiments. The various hardware components such as processor **110,** and memory **108** may all be connected by a bus **114.**

With continued reference to FIG. 1, the memory **108** may represent any type of tangible non-transitory computer readable medium such as random-access memory (RAM), read only memory (ROM), magnetic disk or tape, optical disk, flash memory, or holographic memory. In one embodiment, the memory **108** may comprise a combination of random-access memory and read only memory. The digital processor **110** can be variously embodied, such as by a single-core processor, a dual-core processor (or more generally by a multiple-core processor), a digital processor and cooperating math coprocessor, a digital controller, or the like. The digital processors **110** in addition to controlling the operation of the DCO or orchestrator **102,** executes instructions stored in the memory **108** for performing the parts of the method outlined below.

Software modules that may be stored in, for example, memory **108** are intended to encompass any collection or set of instructions executable by the system **100** so as to configure the system to perform the task that is the intent of the software. The term "software" as used herein is intended to encompass such instructions stored in storage medium such as RAM, a hard disk, optical disk, or so forth, and is also intended to encompass so-called "firmware" that is software stored on a ROM or so forth. Such software may be organized in various ways, and may include software components organized as libraries, Internet-based programs stored on a remote server or so forth, source code, interpretive code, object code, directly executable code, and so forth. It is contemplated that the software may invoke system-level code or calls to other software residing on the server or other location to perform certain functions.

The communication interfaces **112** may include, for example, a modem, a router, a cable, and/or Ethernet port, etc.

The distributed quantum controller or DQOS **104** illustrated in FIG. 1 includes at least one processor **118** hardware device for executing software instructions. The processor **118** can be a custom made or commercially available processor, a central processing unit (CPU), an auxiliary processor among several processors associated with the server computer, a semiconductor-based microprocessor (in the form of a microchip or chip set), or generally any device for executing software instructions. The processor **118** controls the overall operation of the system by execution of processing instructions or software, which are stored in memory **116** connected to the processor **118.** In one embodiment, processor **118,** controls the overall operation of the system by execution of processing instructions for a distributed compiler orchestrator stored in memory **116.**

In general, the system **100** operates based on the input of a collection of user programs, or circuits, **106** to, for example, an input interface **112** and instructions provided in or to the system **100** for distributed quantum computing execution. This system is also configured to optionally monitor and control a DQC or distributed quantum computer **200.**

The distributed quantum controller **104** includes one or more communication interfaces (I/O), such as network interfaces **120** for communicating with external devices, such as a DQO **102,** a DQC or distributed quantum computer **200,** and any external systems or sources such as those including datasets (e.g., artificial intelligence datasets) and other resources (e.g., software routines, processors and/or memories) that may be used by the system **100** to implement the presently described embodiments. The various hardware components such as processor **118,** and memory **116** may all be connected by a bus **124.**

With continued reference to FIG. 1, the memory **116** may represent any type of tangible non-transitory computer readable medium such as random-access memory (RAM), read only memory (ROM), magnetic disk or tape, optical disk, flash memory, or holographic memory. In one embodiment, the memory **116** may comprise a combination of random-access memory and read only memory. The digital processor **118** can be variously embodied, such as by a single-core processor, a dual-core processor (or more generally by a multiple-core processor), a digital processor and cooperating math coprocessor, a digital controller, or the like. The digital processor **118** in addition to controlling the operation of the distributed quantum controller **104,** executes instructions stored in the memory **116** for performing the parts of the method outlined below.

Software modules that may be stored in, for example, memory **116** are intended to encompass any collection or set of instructions executable by the system **100** so as to configure the system to perform the task that is the intent of the software. The term "software" as used herein is intended to encompass such instructions stored in storage medium such as RAM, a hard disk, optical disk, or so forth, and is also intended to encompass so-called "firmware" that is software stored on a ROM or so forth. Such software may be organized in various ways, and may include software components organized as libraries, Internet-based programs stored on a remote server or so forth, source code, interpretive code, object code, directly executable code, and so forth. It is contemplated that the software may invoke system-level code or calls to other software residing on the server or other location to perform certain functions.

The communication interfaces **120** may include, for example, a modem, a router, a cable, and/or Ethernet port, etc.

As will be appreciated, while the DCO or orchestrator **102** and distributed quantum controller or DQOS **104** are illustrated by way of example, the system **100** may be hosted by fewer or more linked computing devices. Each computing device may include, for example, a server computer, desktop, laptop, or tablet computer, smart phone device or any other computing device capable of implementing the method described herein.

As mentioned, the DCO or orchestrator **102** receives a plurality or collection of quantum programs **106** from one or more users. For example, embodiments are contemplated where the quantum programs **106** can be a quantum circuit or a series of logical quantum instructions (e.g., in the form of a programming language designed for describing quantum circuits) within the DCO or orchestrator **102.** In other embodiments, quantum circuits and instructions may be represented by visual programming.

Of course, as noted herein, according to the presently described embodiments, in at least one form, the DCO or orchestrator **102** establishes a communication connection with at least one DQC or distributed quantum computer **200.** Through the communication connection the DCO or orchestrator **102** discovers all quantum processors or nodes of the DQC or distributed quantum computer **200.** Further the DCO or orchestrator 102 may configure the processor **110** to discover the topology of the DQC or distributed quantum computer **200.** For example, the physical arrangement, quantity of qubits, quality of qubits, and type of quantum processors or nodes available in the DQC or distributed quantum computer **200** are recognized in the discovery routine.

It should be appreciated that, in at least one implementation of the presently described embodiments, the system **100** utilizes the DCO or orchestrator **102** to perform high-level compiling which includes instructions to remap the plurality of quantum program by processing the plurality of quantum program to create a set of distributed quantum programs. It should also be appreciated that the remapping process could require a variety of different conversion processes. In one form, the remapping of the plurality of quantum programs to create a set of distributed quantum programs involves converting the plurality of quantum programs to a layer array before remapping to a set of distributed quantum programs. In another form, the plurality of quantum programs may need to be transpiled before converting the plurality of quantum programs to a layer array. Such a form may also involve labeling qubits to minimize non-local gates based, at least in part, on the converted layer array and network topology.

The high-level compiling includes, for example, minimizing the use of communication where possible. Such high-level compiling will, in at least one form, also include a resource allocation in addition to the remapping. This resource allocation may involve determining an allocation of available quantum resources needed for the set of quantum programs. For example, in at least one implementation of the presently described embodiments, the DCO or orchestrator **102** to performing high-level compiling will determine the quality of quantum resources, order qubits by quality, order operational qubits, assign qubits to each quantum processor, and determine the allocation of quantum resources. In some implementations, determining the allocation of quantum resources may involve allocating data and communication qubits and preparing an allocation table.

Thus, in accordance with the presently described embodiments, high-level compiling creates a set of distributed quantum programs that is further processed by low-level compiling to convert the remapped set of quantum programs into at least one set of machine level instructions for each quantum processor or node in the distributed quantum network. The instructions are defined as the instruction to a given node and the time in which it needs to be executed. To produce the instruction set, the system can use information, such as gate times and communication latency, to produce accurate timing. For example, the DCO or orchestrator **102** may perform low-level compiling to generate instructions and an instruction distribution. In another embodiment, the DCO or orchestrator **102** may perform low-level compiling to generate instructions that involve utilizing the allocation table created by performing high-level compiling and the DQC or distributed quantum computer **200** structure to convert the allocation to precise mid-level instructions. In some embodiments, instructions are prepared as a table before converting to precise mid-level instructions. In other embodiments, offsetting the next operations may be performed after preparing the instructions as a table.

According to the presently described embodiments, low-level compiling also involves generating an instruction distribution from the precise mid-level instructions. For example, generating an instruction distribution would include extracting the precise mid-level instructions for each quantum processor or node from the table, converting the instructions into individual tables, remapping high-level instructions, and packaging tables for distribution. In some embodiments, sending at least one set of machine level instructions to the distributed quantum controller **104** is contemplated.

It should also be appreciated that the distributed quantum controller **104** can cause the DQC or distributed quantum computer **200** to execute quantum instructions. According to the presently described embodiments, in one form, the distributed quantum controller **104** receives at least one set of machine level instructions from the DCO or orchestrator **102.** In one example, the distributed quantum controller **104** calibrates the nodes of the distributed quantum computer, ensures synchronization between the nodes, distributes at least one set of machine instructions to each of the nodes, wherein each node executes instructions based at least in part on the allocation determined by the DCO or orchestrator **102.** Further, the distributed quantum controller **104** monitors the performance of the distributed quantum network, receives output from each node, collects all output from the executed instructions, and sends the collection of outputs to the DCO or orchestrator **102.** In the environment where the distributed quantum controller **104** sends the collection of outputs to the DCO or orchestrator **102,** the DCO or orchestrator **102** converts the outputs and sends the converted outputs to at least one user.

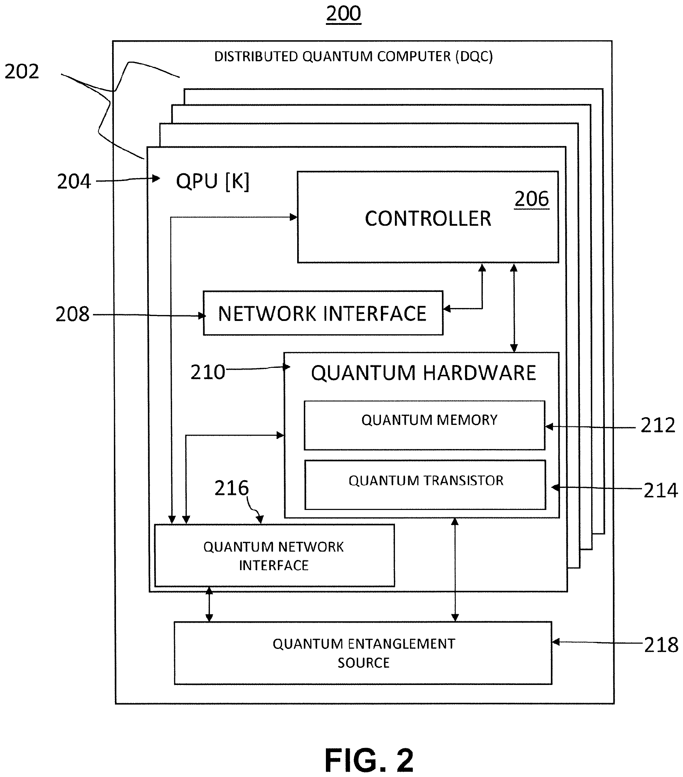

Turning to FIG. 2, according to the presently described embodiments, at least one set of machine level instructions are sent to the heterogeneous DQC or distributed quantum computer **200,** which is a collection **202** of quantum processors (QPU) **204.** It will be appreciated that these quantum computers need not all use the same quantum technologies. However, they must use the same quantum computing method (i.e., gate-based quantum computing, measurement-based quantum computing, etc.). In one embodiment the quantum computers are physically / geographically close, such that network routing is not needed. Further, each of the quantum computers may be directly connected via classical and quantum communication channels.

In another embodiment, DQC or distributed quantum computer **200** can be located physically in different locations (such that the network layer is needed). It should be appreciated that each QPU **204** includes a classical network interface **208** that allows the QPU to receive and transmit messages to the network. The messages are sent to the distributed quantum controller **104** for processing.

The distributed quantum controller **104** processes the messages and sends instructions to a classical controller **206** (e.g., a field programmable gate array or FPGA). The classical controller triggers the quantum network interface (QNI) **216** to generate, transmit, or receive entanglement resources to or from other QPUs. The network interface **216** and the quantum hardware **210** interact such that the QNI **216** can transduce flying qubits to matter qubits if needed, and store them in the quantum hardware in, for example, a quantum memory. Flying qubits can also directly interact with matter qubits without storage, still an interaction initiated by interacting the network interface with the quantum hardware. It should be appreciated that the components can all send messages to each other, layer by layer, for status polling, algorithm outputs, or other reasons.

It should be appreciated that the quantum hardware **210** may include quantum memory **212,** at least one quantum transistor **214,** and a source of quantum entanglement **218.** In some embodiments the quantum entanglement source is local. The quantum entanglement source may communicate directly with the quantum hardware **210,** through the quantum network interface **216** or a combination of both. In other embodiments, the quantum entanglement source is centrally located.

It should be appreciated that the quantum entanglement source **218** generates the entangled qubits needed for the algorithm. For example, this can be a spontaneous parametric down conversion or a quantum dot-based quantum entanglement source. It should also be appreciated that spontaneous parametric down conversion and quantum dot-based quantum entanglement sources are merely example quantum entanglement sources. Other entanglement sources may be implemented.

In other embodiments, the quantum hardware would be anything that is capable of representing a quantum bit or qubit, such as superconducting qubits, ion-based qubits, photonic based qubits, or molecule-based qubits. In other embodiments quantum hardware can also be a quantum transducer, or quantum memories to store qubits, such as entangled qubits, or anything that can convert signal frequencies for quantum processing.

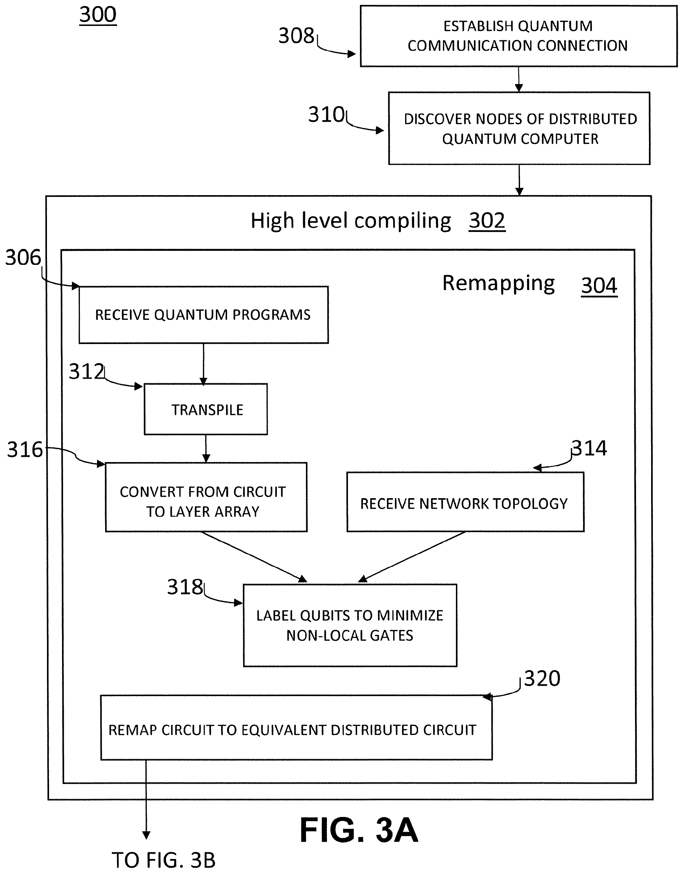

Now, with reference to FIG 3A-E, an exemplary method **300** according to the presently described embodiments is shown. It should be appreciated that this method and others according to the presently described embodiments may be implemented in a variety of manners. For example, the system of FIG. 1 may be used to implement these methods using, as described and in other manners, alone or in combination, hardware configurations and/or software routines having instructions stored on non-transitory computer readable media and run by suitable processors. Other system environments may also be used to implement the method(s) of the presently described embodiments.

In FIG. 3A, the exemplary method **300** shown is for distributed quantum computing execution. Specifically, FIG. 3A shows a method for distributed quantum computing execution that includes establishing (at **308)** a communication connection with at least one DQC or distributed quantum computer **200.** Through the communication connection **126** the DCO or orchestrator **102** discovers (at **310)** all quantum processors or nodes of the DQC or distributed quantum computer **200.** In some embodiments, the user may provide the network topology. In other embodiments, the DCO or orchestrator **102** may use a network discovery protocol to determine the network topology automatically.

The method **300** further includes the step of high-level compiling or HLC (at **302).** In one form, the DCO (or orchestrator) **102** receives (at **306)** a plurality or collection of quantum programs **106.**

High-level compiling (or HLC) (at **302)** generally ensures that all of the quantum operations are executable. For this, the high-level compiling (or HLC) (at **302)** first remaps (at **304)** any non-executable gates to an equivalent gate that is executable (or signals an execution error). In some embodiments, the plurality or collection of quantum programs **106** may be transpiled (at **312)** to remove quantum operations that require greater than 2 qubits. It will be appreciated that this method can remap quantum programs **106** comprising more than 2-qubit gates.

In order to find any quantum operations that need to be remapped, the circuit can be converted into a layer structure (at **316).** Using the layer array and the network topology received (at **314)** by the DCO (or orchestrator) **102,** the next step of remapping involves labeling (at **318)** qubits to minimize non-local gates. For each layer, any 2-qubit gate that has each qubit physically separated between devices, the operation needs to be remapped to an equivalent distributed version (at **320).** This process involves converting the monolithic circuit to a distributed one.

In other embodiments, the circuit can be remapped to a hyper-graph structure to perform optimization for minimizing communication resources. This can be done before or after step **318.** From here, from the output of the optimizers, the allocated qubit resources are labeled (at **318)** such that communication resources and number of operations are minimized.

With reference to FIG 3A, it will be appreciated that, in some embodiments, once the circuit has been transpiled (at **312),** layered (at **316),** and labeled (at **318),** it is distributed (at **320)** by inserting communication (classical and quantum) operations to produce the equivalent distributed circuit or instruction set. From here, additional optimization can be performed to minimize noise by choosing the best qubits (e.g., in terms of coherence time or gate fidelity for that qubit) for the more difficult operations such as two qubit gates.

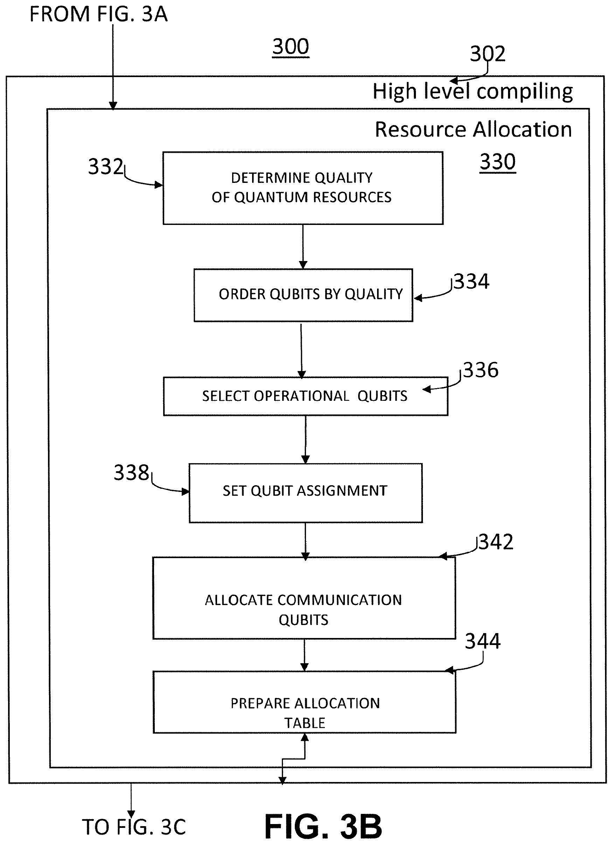

With reference to FIG. 3B, the next step of high-level compiling (or HLC) (at **302)** involves resource allocation (at **330).** In one form, the DCO (or orchestrator) **102** takes the remapped equivalent distributed version and network topology for the steps of resource allocation. The resource allocator finds (at **340)** qubits in the system to run the distributed quantum algorithm. Resource allocation (at **330)** further involves determining quality of quantum resources (at **332),** ordering (at **334)** qubits by their quality (or arranging from best to worst quality), selecting (at **334)** operational qubits, wherein selecting operational qubits may involve designating the best in quality for executing computation (data qubits) and reserving the remaining qubits for communication, placing (at **338)** qubits onto quantum processors or quantum processing units, and determining (at **338)** an allocation of quantum resources. It should be appreciated that the step of determining an allocation of quantum resources may further include allocating (at **342)** communication qubits and preparing (at **344)** an allocation table. It will be appreciated that the allocation table may consist of qubit IDs and their role, wherein the role may be operational or for communication, where in a mapping between the qubit IDs and roles are mapped to physical qubits in the distributed quantum computer **200.**

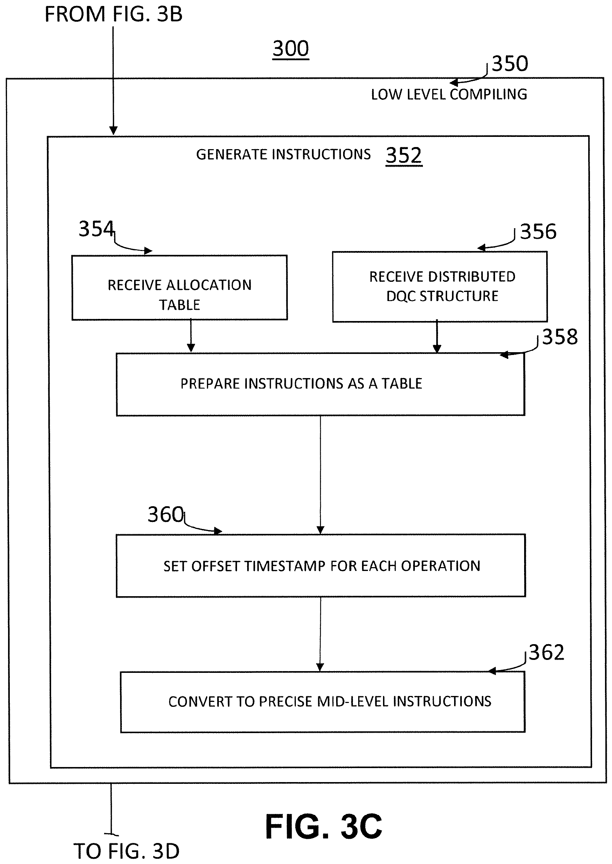

With reference to FIG. 3C, once high-level compiling or HLC (at **302)** is complete, the HLC outputs (outputs of FIG 3B) are utilized by the DCO or orchestrator **102** to perform low-level compiling (LLC) (at **250).** Low-level compiling or LLC (at **350)** utilizes the resource allocation (at **354)** and the distributed programs remapped to the distributed DQC structure (at **356)** and converts (at **362)** structure and the allocation to precise mid-level instructions. Here, converting to mid-level instructions may comprise creating a new table with instructions. In some embodiments, the instructions are written as mathematical operations that must be converted into mid-level instructions. In other embodiments, the instructions are written as assembly level mid-level instructions.

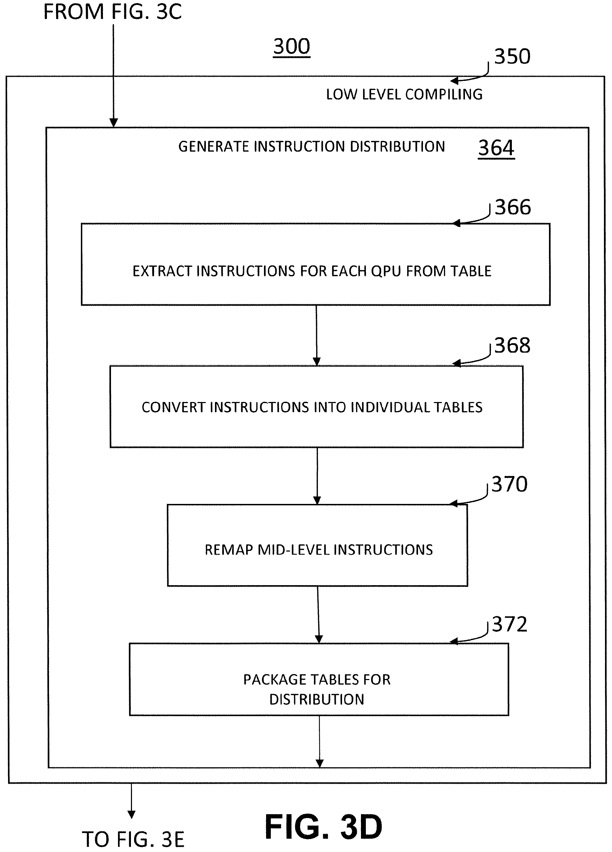

Once generated (at **362),** the machine instructions are packaged up and sent FIG 3D (at **372)** the DCO or orchestrator **102.** Here, it will be appreciated that packaging may entail collecting the logical instructions each QPU **204** needs to execute on an individual basis, information about the network (e.g., information about each node's IP address, their qubit architecture, their gate set, and other information). In some embodiments, only the instructions and the time at which to execute them are packaged.

Next, the DCO or orchestrator **102** sends all of the individual instructions to the distributed quantum controller **104** (also referred to as the distributed quantum operating system or DQOS).

In some embodiments, with reference to FIG. 3C, instruction generation (at **352)** may also include preparing (at **358)** instructions as a table before converting to precise mid-level instructions. In other embodiments, setting (at **360)** offset timestamp indicating when the next operations may be performed after preparing (at **362)** the instructions as a table. Here, gate and communication latency are used to determine and set specific timestamps for each instruction. It will also be appreciated that the complier considers the physical aspects of entanglement generation when setting the instruction durations.

With reference to FIG. 3D, low-level compiling (at **350)** also involves generating (at **364)** an instruction distribution from the precise mid-level instructions. For example, generating (at **364)** an instruction distribution would include extracting (at **366)** the precise mid-level instructions for each quantum processor or node from the table, converting (at **368)** the instructions into individual tables, remapping (at **370)** mid-level instructions, and packaging (at **372)** tables for distribution. In some embodiments, sending at least one set of machine level instructions to the distributed quantum controller or DQOS **104** is contemplated. It will be appreciated that in some embodiments, remapping (at **370)** mid-level instructions may be performed by the distributed quantum controller or DQOS **104** if the distributed quantum controller or DQOS **104** has received information about the distributed quantum computer **200.** In other embodiments remapping (at **370)** mid-level instructions may be performed on the QPU **204.**

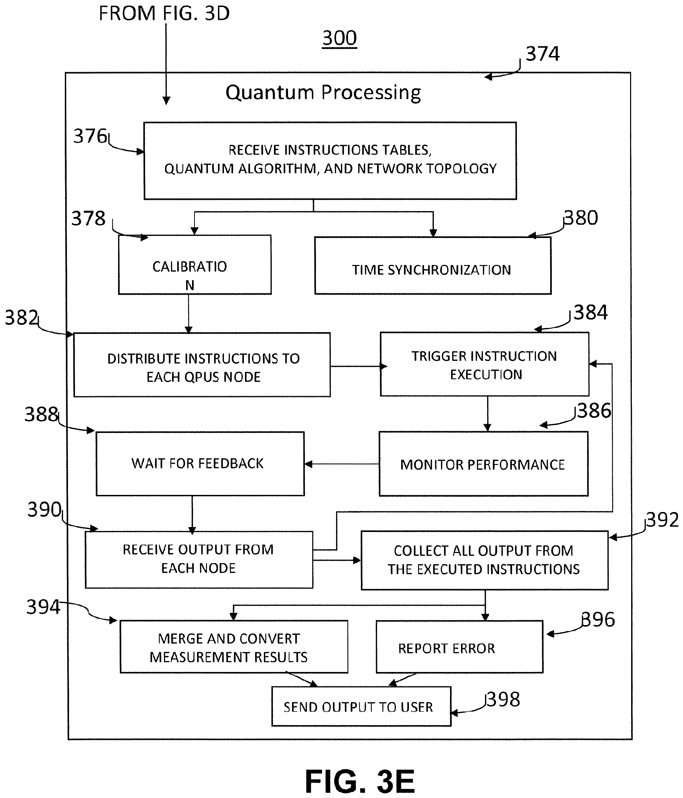

The method illustrated in FIG. 3E receives (at **376)** the output of FIG. 3D The distributed quantum controller or DQOS **104** coordinates and triggers all the quantum processing units to execute (at **384)** the instructions. The distributed quantum controller or DQOS **104** receives (at **388)** feedback from the quantum processing. After execution, measurement results are sent (at **390)** back to the distributed quantum controller or DQOS **104.** The distributed quantum controller or DQOS **104** can trigger re-executions (at **384)** if needed. The outputs are collected (at **392)** and sent back to the conductor who can merge (at **394)** them accordingly for the user's (at **398)** final results. The distributed quantum controller or DQOS 104 can trigger (at **394)** error correction steps during and after execution and perform error mitigation (at **394)** to the outputs. It will be appreciated that the error correction step analyzes the output of all devices in the distributed quantum computer **200** and coordinates with the DCO or orchestrator **102** to redo parts of the method that led to the error. It will also be appreciated that the distributed quantum controller or DQOS **104** can dynamically change the order of execution depending on error correction needs, importance/priority, or other features that affect fidelity.

In some embodiments, the optimization method is configured to produce as few communication steps as possible, trading off circuit width and depth for higher algorithm fidelity and fewer communication steps. In other embodiments, there may be a second layer of transpiling in a lower layer that can modify the circuit according to the available resources at that time of execution in case the resources are not free at that time (due to scheduling).

The system is configured to allow the number of retries to vary during error correction, because entanglement generation is not always deterministic. The compiler allows for flexibility here and can be set to allow for more retries at the cost of algorithm fidelity.

It should be appreciated that once instructions are sent (at **382)** to the individual QPUs **204** (or before, order is not important here), they perform a synchronization (at **380)** through the centralized controller **206** for the QPUs **204** involved in the computation. A round of calibration (at **378)** can also be done at this stage to ensure the devices are working correctly. In some embodiments, the quantum processors or QPUs 204 can potentially receive multiple quantum program instructions at the same time but with nonoverlapping resources. Some operations could therefore have the same timestamp.

In another embodiment the method includes the distributed quantum controller or DQOS **104** sending the instructions to a classical controller **206** (e.g., a field programmable gate array or FPGA). The distributed quantum controller or DQOS **104** configures a classical controller to trigger (at **384)** the quantum network interface (QNI) **216** to generate, transmit, or receive entanglement resources to or from other QPUs **204** . The network interface **216** and the quantum hardware **210** interact such that the QNI **216** can transduce flying qubits to matter qubits if needed, and store them in the quantum hardware in, for example, a quantum memory. Flying qubits can also directly interact with matter qubits without storage, still an interaction initiated by interacting the network interface with the quantum hardware. It should be appreciated that the components can all send messages to each other, layer by layer, for status polling, algorithm outputs, or other reasons.

It will also be appreciated that, in some embodiments, after the distributed quantum computer **200** receives (at **382)** the instructions, the distributed quantum controller or DQOS **104** configures a classical controller to cause each QPU **204** to acknowledge that they have received instructions. Then each QPU **204** is triggered to start its clock, process individual instructions, and open the quantum network interface. Outputs are gathered and processed. Then the results are sent back to the DCO or orchestrator **102.**

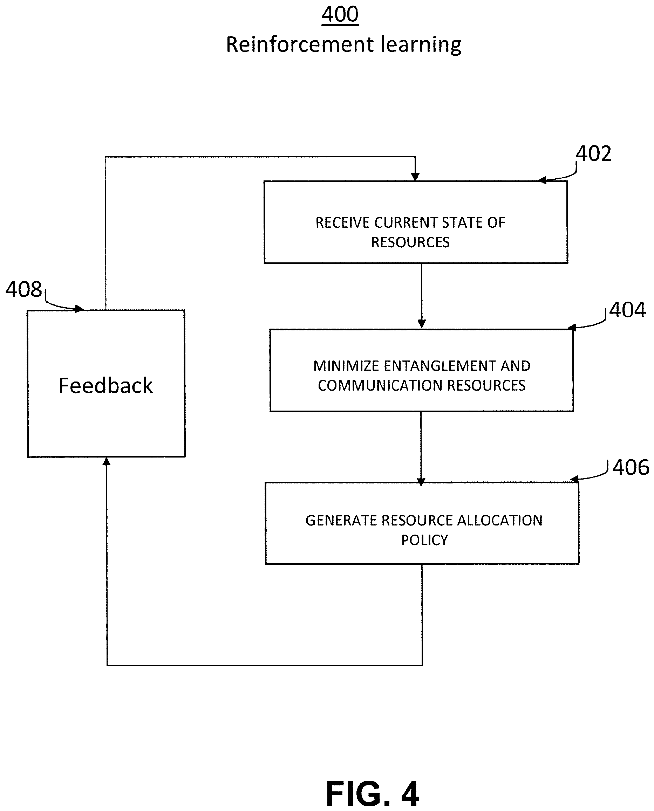

In some embodiments, a machine learning system is trained to optimize the allocation of qubits during resource allocations. For example, in some embodiments this may be a reinforcement learning network. With reference to FIG. 4, the machine learning system receives (at **402)** a list or array of the available qubits and outputs an optimal allocation that can optimize for precision, error rate, output fidelity, or other metrics of the method **100** for distributed quantum computing execution, such as information on the quality of execution and the current state of the quantum resources from monitoring (at **386)** the performance in FIG 3E. In other embodiments, the machine learning system can also choose the qubit allocation to minimize the amount of communication needed. It will be appreciated that other approaches to optimize allocation are contemplated, such as linear programming and greedy algorithms. A machine learning network is trained to minimize (at **404)** or optimize entanglement and communication resources. The output of this minimization is used to generate (at **406)** a resource allocation policy. Based on the performance of the policy a value for feedback is set (at **408)** to use for the next iteration. The reward for the reinforcement system is better fidelity output.

The exemplary system may thus include one or more computing devices, each of which may be a PC, such as a desktop, a laptop, server computer, microprocessor, cellular telephone, tablet computer, combination thereof, or other computing device capable of executing instructions for performing the exemplary method.

The methods described herein and illustrated in the figures may be at least partially implemented in a computer program product or products that may be executed on a computer or computers. The computer program product(s) may comprise a non-transitory computer-readable recording medium on which a control program is recorded (stored), such as a disk, hard drive, or the like. Common forms of non-transitory computer-readable media include, for example, floppy disks, flexible disks, hard disks, magnetic tape, or any other magnetic storage medium, CD-ROM, DVD, or any other optical medium, a RAM, a PROM, an EPROM, a FLASH-EPROM, or other memory chip or cartridge, or any other non-transitory medium from which a computer can read and use.

Alternatively, the methods may be implemented in transitory media, such as a transmittable carrier wave in which the control program is embodied as a data signal using transmission media, such as acoustic or light waves, such as those generated during radio wave and infrared data communications, and the like.

The exemplary methods may be implemented on one or more general purpose computers, special purpose computers, a programmed microprocessor or microcontroller and peripheral integrated circuit elements, an ASIC or other integrated circuit, a digital signal processor, a hardwired electronic or logic circuit such as a discrete element circuit, a programmable logic device such as a PLD, PLA, FPGA, Graphical card CPU (GPU), or PAL, or the like.

As will be appreciated, the steps of the methods need not all proceed in the order illustrated and fewer, more, or different steps may be performed.

The exemplary embodiment has been described with reference to the preferred embodiments. Obviously, modifications and alterations will occur to others upon reading and understanding the preceding detailed description. It is intended that the exemplary embodiment be construed as including all such modifications and alterations insofar as they come within the scope of the appended claims or the equivalents thereof.

## Claims

1. A system for distributed quantum computing execution, the system comprising:
at least one processor;
at least one memory including computer program code; the at least one memory and the computer program code configured to, with the processor, cause the system at least to perform:
receiving a plurality of quantum programs from one or more users;
establishing a communication connection with at least one distributed quantum computer;
discovering all nodes of the distributed quantum computer, wherein each node comprises at least one quantum processor;
processing the plurality of quantum programs to create a remapped set of distributed quantum programs;
determining an allocation of available quantum resources needed for the set of quantum programs;
converting the remapped set of quantum programs into at least one set of machine level instructions for each node in the distributed quantum computer;
distributing the at least one set of machine instructions to each of the nodes, wherein each node executes instructions based at least in part on the allocation determined by the processor;
monitoring the performance of the distributed quantum computer;
collecting all output from the executed instructions;
retrieving the collection of output;
converting the output; and
sending the converted output to at least one user.

2. The system according to claim 1, wherein topology of the distributed quantum computer is provided by at least one of user input or an automatic network discovery protocol.

3. The system according to claim 1, wherein remapping further comprises determining quality of available quantum resources within the distributed quantum computer.

4. The system according to claim 1, wherein the plurality or collection of quantum programs may be transpiled to remove quantum operations requiring greater than 2 qubits.

5. The system according to claim 1, wherein the at least one memory and the computer program code are further configured to, with the processor, cause the system to ensure all of the quantum operations are executable, wherein ensuring all of the quantum operations are executable comprises one or more of the following:
remapping any non-executable gates to an equivalent gate that is executable;
signaling an execution error.

6. The system according to claim 1, wherein resource allocation further comprises:
finding qubits in the system to run the distributed quantum algorithm;
determining quality of quantum resources;
ordering qubits by their quality;
designating qubits for computation and reserving the remaining qubits for communication; and
determining an allocation of quantum resources based at least in part on the designation for computation and the remapped distributed set of quantum programs.

7. The system according to claim 1, wherein resource allocation further comprises a machine learning system is trained to optimize the allocation of qubits.

8. The system according to claim 7, wherein resource allocation is optimized by a reinforcement learning system, the reinforcement learning system comprising:
receiving information on quality of execution and current state of the quantum resources;
training a machine learning network to optimize entanglement and communication resources;
generating a resource allocation policy based at least in part on the optimization of entanglement and communication resources; and
setting a value for feedback based on the performance of the policy to use for the next iteration.

9. The system according to claim 7, wherein, additional optimization can be performed to minimize noise by choosing the best qubits based on at least one of coherence time or gate fidelity for that qubit.

10. The system according to claim 1, wherein the at least one memory and the computer program code are further configured to, with the processor, cause the system to:
perform a synchronization of nodes involved in the computation; and
calibrate the nodes of the distributed quantum computer.

11. A method for distributed quantum computing execution, the method comprising:
receiving a plurality of quantum programs from one or more users at a first processor;
establishing a communication connection with at least one distributed quantum computer;
discovering all nodes of the distributed quantum computer, wherein each node comprises at least one quantum processor;
processing the plurality of quantum programs to create a remapped set of distributed quantum programs;
determining an allocation of available quantum resources needed for the set of quantum programs;
converting the remapped set of quantum programs into at least one set of machine level instructions for each node in the distributed quantum computer;
distributing the at least one set of machine instructions to each of the nodes, wherein each node executes instructions based at least in part on the allocation determined by the processor;
monitoring the performance of the distributed quantum computer;
collecting all output from the executed instructions;
retrieving the collection of output;
converting the output; and
sending the converted output to at least one user.

12. The method according to claim 11, wherein:
topology of the distributed quantum computer is provided by at least one of user input or an automatic network discovery protocol,
remapping further comprises determining quality of available quantum resources within the distributed quantum computer,
the plurality or collection of quantum programs may be transpiled to remove quantum operations requiring greater than 2 qubits, and
resource allocation further comprises a machine learning system is trained to optimize the allocation qubits.

13. The method according to claim 11, wherein the method further comprises:
setting instruction durations based in part on the physical aspects of entanglement generation; and
ensuring all of the quantum operations are executable, wherein ensuring all of the quantum operations are executable comprises one or more of the following:
remapping any non-executable gates to an equivalent gate that is executable;
signaling an execution error.

14. The method according to claim 11, wherein resource allocation further comprises:
finding qubits in the system to run the distributed quantum algorithm;
determining quality of quantum resources;
ordering qubits by their quality;
designating for computation and reserving the remaining qubits for communication; and
determining an allocation of quantum resources based at least in part on the designation for computation and the remapped distributed set of quantum programs.

15. The method according to claim 14, wherein resource allocation is optimized by a reinforcement learning system, the reinforcement learning system comprising:
receiving information on the quality of execution and the current state of the quantum resources;
training a machine learning network to optimize entanglement and communication resources;
generating a resource allocation policy based at least in part on the optimization of entanglement and communication resources; and
setting a value for feedback based on the performance of the policy to use for the next iteration,
wherein additional optimization can be performed to minimize noise by choosing the best qubits based on at least one of coherence time or gate fidelity for that qubit.
